# EUROPÄISCHE PATENTSCHRIFT

(11) **EP 3 053 681 B1**
(45) Veröffentlichungstag und Bekanntmachung des Hinweises auf die Patenterteilung: **27.09.2017**
(21) Anmeldenummer: 15153691.9
(22) Anmeldetag: 03.02.2015
(51) Int. Cl.: B23B 31/02, B23B 31/08

(54) **Werkzeughalter für Werkzeugmaschinen**
Tool holder for machine tools
Porte-outil pour machines-outils

(43) Veröffentlichungstag der Anmeldung: 10.08.2016
(73) Patentinhaber: Wellach, Adolf, 48712 Gescher (DE)
(72) Erfinder: Wellach, Adolf, 48712 Gescher (DE); Wissing, Johannes, 48703 Stadtlohn (DE)
(74) Vertreter: Zenz Patentanwälte Partnerschaft mbB

(56) Entgegenhaltungen:
- EP-A1- 2 805 785
- DE-C2- 4 019 671

## Beschreibung

Die vorliegende Erfindung betrifft einen Werkzeughalter, gemäß dem Oberbegriff des Anspruchs 1 und insbesondere einen Werkzeughalter mit Radialausgleich. Ein Werkzeughalter für Werkzeugmaschinen mit einem Winkelausgleich ist beispielsweise aus der DE 40 19 671 C2 bekannt. Bei dem aus der vorgenannten Druckschrift bekannten Werkzeughalter ist ein Radialausgleich zwischen dem maschinenseitigen Halterteil und dem werkzeugseitigen Halterteil möglich, und zwar aufgrund der Verwendung einer speziellen Kupplungseinrichtung (Oldham-Kupplung). Ferner ermöglicht der bekannte Werkzeughalter einen Winkelausgleich des werkzeugseitigen Halterteils (der notwendig ist, wenn die zu bearbeitende Bohrung gegenüber dem Werkzeug in dem Werkzeughalter winkelversetzt ist).

Um eine rasche Bearbeitung von Werkstücken zu ermöglichen ist man bestrebt, mit einer möglichst hohen Schnittgeschwindigkeit zu arbeiten. Mit bekannten Werkzeughaltern sind Schnittgeschwindigkeiten von bis zu 160m/min möglich, bei höheren Geschwindigkeiten sind die von dem Werkzeughalten auf das Werkzeug (und damit das Werkstück) sowie die von dem Werkstück auf das Werkzeug übertragenen Schwingungen zu hoch, um die erforderliche präzise Bearbeitung des Werkstücks zu gewährlisten.

Aus der EP 2 805 785 A1 ist ein Werkzeughalter für Werkzeugmaschinen mit Winkelausgleich bekannt. Der Werkzeughalter umfasst ein maschinenseitiges Halterteil und ein werkzeugseitiges Halterteil und eine die Halterteile mit radialem Spiel drehfest miteinander verbindende Kupplungseinrichtung, die sich maschinenseitig an einer Winkelscheibe abstützt, welche über einen balligen Bereich winkelverstellbar an dem maschinenseitigen Halterteil angeordnet ist. Der Werkzeughalter umfasst ferner ein radial bewegbares Kupplungselement sowie eine das werkzeugseitige Halterteil gegen das maschinenseitige Halterteil verspannende Vorspanneinrichtung, wobei die Kupplungseinrichtung und die Vorspanneinrichtung jeweils ein elastisches Kunststoffelement umfassen, wobei die Shore-A-Härte des elastischen Kunststoffelements der Vorspanneinrichtung größer als die Shore-A-Härte des elastischen Kunststoffelements der Kupplungseinrichtung ist. Durch die Vielzahl der Bauelemente dieses Werkzeughalters ist die axiale Länge des Werkzeughalters erheblich.

Es ist daher Aufgabe der vorliegenden Erfindung, einen Werkzeughalter für Werkzeugmaschinen mit einer kompakten Bauform bereitzustellen.

Die Aufgabe wird erfindungsgemäß gelöst durch einen Werkzeughalter gemäß Patentanspruch 1. Der erfindungsgemäße Werkzeughalter umfasst ein maschinenseitiges Halterteil und ein werkzeugseitiges Halterteil sowie eine zwischen den Halterteilen angeordnete Kupplungseinrichtung, welche die beiden Halterteile mit radialem Spiel drehfest miteinander verbindet. Die Kupplungseinrichtung selber ist über Mitnehmer mit den beiden Halterteilen verbunden.

Der erfindungsgemäße Werkzeughalter umfasst ferner eine das werkzeugseitige Halterteil gegen das maschinenseitige Halterteil verspannende, das werkzeugseitige Halterteil zumindest teilweisende umgebende Vorspanneinrichtung, wobei die Vorspanneinrichtung eine Mehrzahl von Wälzkörpern und einen elastischen Kunststoffring umfasst.

Zwischen der Kupplungseinrichtung und dem maschinenseitigen Halterteil ist eine elastische Kunststoffscheibe angeordnet. Aufgrund der Materialeigenschaften dieser Kunststoffscheibe und aufgrund der Anordnung der Kunststoffscheibe sorgt diese vorteilhafterweise dafür, dass eine Schwingungsübertragung zwischen dem maschinenseitigen und dem werkzeugseitigen Halterteil weitgehend unterdrückt wird.

Aufgrund der Anordnung der Kunststoffscheibe umfasst diese im einfachsten Fall lediglich die Öffnungen zur Durchführung von zumindest einem Mitnehmer zwischen Kupplungseinrichtung und werkzeugseitigem Halterteil, d.h. die Kunststoffscheibe kann mit einer großen Fläche an dem werkzeugseitigen Halterteil anliegen und kann die Schwingungsübertragung dadurch besonders gut verhindern. Die Anordnung genau zwischen Kupplungseinrichtung und werkzeugseitigem Halterteil gewährleistet darüber hinaus, dass keine neuen Schwingungen "hinter" der Kunststoffscheibe und vor dem werkzeugseitigen Halterteil entstehen.

Neben der weitgehenden Unterdrückung der Schwingungsübertragung sorgt die Kunststoffscheibe ferner für einen ggf. notwendigen Winkelausgleich, da diese derart elastisch gestaltet ist, dass das werkzeugseitige Halterteil geringfügig gegenüber dem maschinenseitigen Halterteil verkippen kann. Aufgrund der Verwendung und Anordnung der Kunststoffscheibe zwischen dem maschinenseitigen Halterteil und der Kupplungseinrichtung wird also ein doppelter Effekt erzielt, nämlich die Unterdrückung der Schwingungsübertragung und die Möglichkeit zu einem Winkelausgleich.

Die Verkippung des werkzeugseitigen Halterteils wird ferner durch den elastischen Kunststoffring in der Vorspanneinrichtung gewährleistet. Dieser Kunststoffring verhindert, dass die Wälzkörper der Vorspanneinrichtung gequetscht werden, wobei ein solches Quetschen bei dem Verkippen das Radialspiel stört.

Der Werkzeughalter kann in verschieden großen Ausführungen mit unterschiedlich schweren Werkzeugen gebaut und betrieben werden. Um stets einen optimalen Winkelausgleich zu gewährleisten ist die (Shore-A-)Härte des Kunststoffrings zwischen Kupplungseinrichtung und maschinenseitigem Halterteil an das Gewicht des werkzeugseitigen Halterteils sowie des Werkzeugs selber anzupassen, wobei eine entsprechende Anpassung für den Fachmann mit einfachen Mitteln durchführbar ist.

Mit der Vorspanneinrichtung wird das werkzeugseitige Halterteil gegenüber dem maschinenseitigen Halterteil verspannt, wobei das werkzeugseitige Halterteil über die Bauteile der Vorspanneinrichtung, der Kupplungseinrichtung sowie die Kunststoffscheibe gegen das maschinenseitige Halterteil gedrückt wird. Die Vorspanneinrichtung selber kann beispielsweise an einem Gewinde einer die Vorspanneinrichtung sowie das werkzeugseitige Halterteil umgebenden Hülse mittels eines Vorspannringes axial verstellbar festgelegt sein, wobei die Hülse Teil des maschinenseitigen Halterteils sein kann (und dann einstückig mit diesem ausgebildet ist) oder zur Vereinfachung der Herstellung des maschinenseitigen Halterteils an diesem befestigt ist. Die (Shore-A-)Härte des elastischen Kunststoffrings der Vorspanneinrichtung selber wird an die Härte des Kunststoffrings zwischen Kupplungselement und maschinenseitigem Halterteil angepasst, und zwar derart, dass das werkzeugseitige Halterteil angemessen fest in bzw. an dem maschinenseitigen Halterteil festgelegt werden kann, weiterhin aber ein Winkelausgleich durch ein Verkippen gegen die Kunststoffscheibe zwischen Kupplungseinrichtung und maschinenseitigem Halterteil möglich ist. Ferner muss die Komprimierbarkeit des Kunststoffrings selber beim Verkippen gewährleistet sein.

Durch die Verwendung der beiden elastischen Kunststoffelemente können darüber hinaus Fehler in dem Gewinde der Hülse ausgeglichen werden. Die elastischen

Kunststoffelemente sind vorzugsweise aus einem Polyurethan-Kautschuk gefertigt. Polyurethan-Kautschuk ist ein synthetisches Elastomer mit speziellen Eigenschaften und wesentlichen Vorteilen gegenüber den altbekannten Gummisorten: sehr lange Lebensdauer bei werkstoffgerechtem Einsatz; hohe Reißfestigkeit bzw. hoher Einreißwiderstand; sehr gute Beständigkeit gegenüber den in der spanlosen Fertigung gebräuchlichen Schmiermitteln; ausgezeichnete Elastizität; gute thermische Belastbarkeit. Beispielsweise können die elastischen Kunststoffelemente aus FIBROFLEX ® gefertigt sein. Alternativ können andere elastische Kunststoffe verwendet werden.

Erfindungsgemäß umfasst die Kupplungseinrichtung ein zylinderförmiges Kupplungsmittel, welches eine Mehrzahl von Wälzkörpern aufweist, wobei die Wälzkörper derart in dem Kupplungsmittel angeordnet sind, dass die Wälzkörper aus zwei Stirnfläche des Kupplungsmittels hervorragen. Das Kupplungsmittel gewährleistet aufgrund der aus den Stirnflächen hervorstehenden Wälzkörper, dass sich die beiden Halterteile radial gegeneinander verschieben können.

Um welche Stirnflächen es sich handelt ist abhängig von der genauen Gestaltung des Kupplungsmittels. Umfasst das Kupplungsmittel beispielsweise lediglich eine Wälzkörper aufweisende Wälzscheibe, so handelt es sich bei den Stirnflächen um die beiden gegenüberliegenden Stirnflächen dieser Wälzscheibe, wobei eine dieser Stirnflächen dem maschinenseitigen, die andere dem werkzeugseitigen Halterteil zugewandt ist. Ein entsprechendes Kupplungsmittel bedingt eine sehr kompakte Bauweise des Werkzeughalters.

Bei einer bevorzugten Ausführungsform ist es daher vorgesehen, dass das Kupplungsmittel von einer Wälzscheibe gebildet ist, welche auf den den Halterteilen zugewandten Stirnflächen Ausnehmungen aufweist, in welchen Wälzkörper angeordnet sind. Die Ausnehmungen in den Stirnflächen der Wälzscheibe durchdringen diese nicht, sondern bilden lediglich Aufnahmen für die Wälzkörper, d.h. die Wälzkörper ragen nur an einer Stirnfläche der Wälzscheibe über diese Stirnfläche hinaus. Die bei dieser Ausführungsform verwendete Wälzscheibe weist also Wälzkörper auf, die lediglich über die dem maschinenseitigen Halterteil zugewandte Stirnfläche hervorragen und solche, die lediglich über die dem werkzeugseitigen Halterteil zugewandte Stirnfläche hervorragen. Eine entsprechende Ausführungsform hat ferner den Vorteil, dass die Kupplungseinrichtung nur wenige Bauteile umfasst und der Werkzeughalter somit einfach zu fertigen ist.

Bei dieser Ausführungsform umfasst die Wälzscheibe ferner eine Mehrzahl von Öffnungen zur Aufnahme von den beiden Halterteilen zugeordneten Mitnehmern, die sich von diesen Halterteilen in die Wälzscheibe erstrecken und für die drehfeste Verbindung der Halterteile sorgen.

Bei einer alternativen Ausführungsform umfasst das Kupplungsmittel zwei hintereinander angeordnete Wälzscheiben mit einer Mehrzahl von Öffnungen, in welchen Wälzkörper angeordnet sind. Die Öffnungen können lediglich als Ausnehmungen, wie oben beschrieben, ausgebildet sein, oder als Durchgangsöffnungen, die die Wälzscheibe vollständig durchdringen. Bei einer solchen Ausführung der Öffnungen ragen die Wälzkörper beider Wälzscheiben über beide Stirnflächen einer Wälzscheibe hinaus, so dass es notwendig ist, dass die Wälzscheiben derart angeordnet sind, dass die Wälzkörper der einen Wälzscheibe in einem wälzmittel-freien Bereich der anderen Wälzscheibe an dieser anliegen. Um dies zu erreichen können beispielsweise zwei identische, aber um 90° verdrehte Wälzscheiben verwendet werden, wobei in einem solchen Fall, d.h. wenn zwei identische Wälzscheiben verwendet werden, noch die Anordnung der Durchgangsöffnungen zu beachten ist, wobei die genaue Anordnung von dem Anwendungszweck abhängig ist und von einem Fachmann leicht festgelegt werden kann. Bedingt durch die Konstruktion der beiden aneinander liegenden Wälzscheiben ist es bei dieser Ausführungsform notwendig, dass die Wälzscheiben Öffnungen für die Mitnehmer beider Halterteile aufweisen. Die Ausführung mit den Durchgangsöffnungen hat den Vorteil, dass die Herstellung vereinfacht ist, da sich die Durchgangsöffnungen leicht einbringen lassen.

Bei einer weiteren alternativen Ausführungsform ist es vorgehsehen, dass das Kupplungsmittel zwei Wälzscheiben mit einer Mehrzahl von Durchgangsöffnungen aufweist, in welchen Wälzkörper angeordnet sind, wobei zwischen den Wälzscheiben eine wälzkörper-freie Kupplungsscheibe angeordnet ist. Bei dieser Ausführungsform sind die beiden Wälzscheiben durch eine weitere, wälzmittel-freie Kupplungsscheibe voneinander getrennt, so dass die Restriktionen hinsichtlich der Anordnung der Durchgangsöffnungen für die Wälzkörper wegfallen. Bei dieser Ausführungsform ist es außerdem ausreichend, dass die Wälzscheiben Öffnungen für den bzw. die Mitnehmer lediglich eines Halterteils aufweisen. Die Mitnehmer beider Halterteile durchlaufen die Wälzscheiben und sind in Öffnungen der Kupplungsscheibe aufgenommen.

Bei dem erfindungsgemäßen Werkzeughalter ist zwischen dem werkzeugseitigen Halterteil und der Kupplungseinrichtung eine Kunststoffscheibe angeordnet. In Abhängigkeit von der genauen Ausführung der Kupplungseinrichtung kann es vorkommen, dass Wälzkörper der oder einer Wälzscheibe an der Kunststoffscheibe anliegen. Insbesondere bei Kunststoffscheiben mit einer geringen Shore-A-Härte, also relativ "weichen" Kunststoffscheiben, ist es dann zum Verhindern eines Einlaufens der Wälzkörper in die Kunststoffscheibe vorgesehen, dass zwischen Kunststoffscheibe und Kupplungseinrichtung eine Stützscheibe angeordnet ist.

Üblicherweise werden Werkstücke bearbeitet, indem diese gedreht werden, das Werkzeug (in dem Werkzeughalter) selber aber nicht gedreht wird. Aufgrund der hohen Drehgeschwindigkeit, kombiniert mit einer hohen Schnittgeschwindigkeit, die mit dem erfindungsgemäßen Werkzeughalter möglich ist, wird eine hohe Wärmemenge auf das Werkzeug, und von diesem auf den Werkzeughalter, übertragen. Um eine übermäßige Wärmeübertragung auf das Werkzeug zu verhindern, ist es bei einer bevorzugten Ausführungsform vorgesehen, dass sich durch die Kupplungseinrichtung und die Kunststoffscheibe eine Kühlmittelleiteinrichtung erstreckt, mit welcher dem Werkzeug ein Kühlmittel zugeführt wird, welches über das Werkzeug im Bereich der Schneideflächen abgegeben wird. Die Kühlmittelleiteinrichtung ist derart ausgebildet bzw. angeordnet, dass das Radialspiel zwischen den Halterteilen nicht beeinträchtigt ist. Bei dieser Ausführungsform erstrecken sich durch die beiden Halterteile entsprechende Kühlmittelleitungen, mit denen das Kühlmittel der Kühlmittelleiteinrichtung und von dieser dem Werkzeug zugeleitet wird.

Die Ausführung der Kühlmittelleiteinrichtung selber kann auf verschiedene Arten erfolgen, solange das Radialspiel zwischen den Halterteilen gewährleistet ist. So ist es beispielsweise denkbar, dass diese als elastisches Kunststoffrohr ausgeführt ist, welches zwischen den Halterteilen verklemmt ist. Bei einer bevorzugten Ausführungsform ist es aber vorgesehen, dass die Enden der Kühlmittelleiteinrichtung in Ausnehmungen der Halterteile aufgenommen sind, wobei beide Enden mit O-Ringen in den Ausnehmungen gesichert sind. Die Verwendung von elastischen O-Ringen gewährleistet das Radialspiel, gleichzeitig ist eine zuverlässige Abdichtung der Kühlmittelleiteinrichtung in den Ausnehmungen gegeben.

Im nachfolgenden werden zwei bevorzugte Ausführungsformen des erfindungsgemäßen Werkzeughalters unter Bezugnahme auf die Zeichnung beschrieben, in welcher
Figur 1 eine Schnittansicht einer ersten Ausführungsform zeigt,
Figuren 2a, 2b, 3 Detailansichten der Ausführungsform gemäß Figur 1 zeigen,
Figur 4 eine Schnittansicht einer zweiten Ausführungsform zeigt,
Figuren 5a, 5b Detailansichten einer ersten Ausführungsform einer Wälzscheibe zeigen, und
Figuren 6a, 6b Detailansichten einer zweiten Ausführungsform einer Wälzscheibe zeigen.

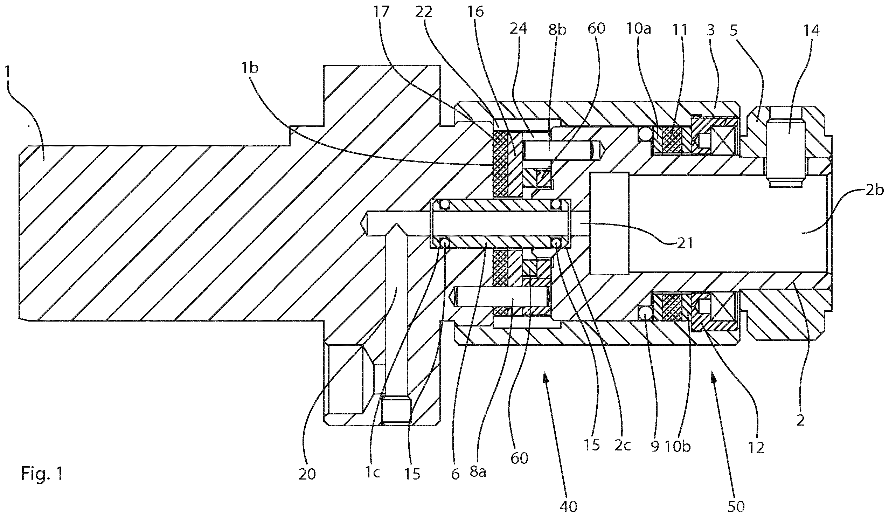

Figur 1 zeigt eine Schnittansicht einer ersten Ausführungsform des erfindungsgemäßen Werkzeughalters mit einem maschinenseitigen Halterteil 1, das drehfest in einer Werkzeugmaschine eingespannt werden kann. Der erfindungsgemäße Werkzeughalter umfasst ferner ein werkzeugseitiges Halterteil 2, in welchem das zur Bearbeitung des Werkstückes vorgesehene Werkzeug in einer Werkzeugaufnahme 2b aufgenommen und über einen Gewindestift 14 befestigt werden kann. Zwischen dem maschinenseitigen Halterteil 1 und dem werkzeugseitigen Halterteil 2 ist eine Kupplungseinrichtung 40 vorgesehen, welche die beiden Halterteile 1, 2 drehfest und mit radialem Spiel miteinander verbindet.

Das werkzeugseitige Halterteil 2 und die Kupplungseinrichtung 40 sind von einer Hülse 3 aufgenommen, die fest mit dem maschinenseitigen Halterteil 1 verbunden ist. Bei anderen Ausführungsformen kann das maschinenseitige Halterteil 1 einstückig mit der Hülse 3 ausgebildet sein. Der maximale Außendurchmesser des werkzeugseitigen Halterteils 2 ist geringer als der Innendurchmesser der an dem maschinenseitigen Halterteil 1 befestigten Hülse 3, so dass eine radiale Verschiebung des werkzeugseitigen Halterteils 2 zu dem maschinenseitigen Halterteil 1 möglich ist, wobei diese Verschiebung bei der gezeigten Ausführungsform durch die Hülse 3 begrenzt ist. Der zwischen der Hülse 3 und dem werkzeugseitigen Halterteil 2 gebildete Ringraum hat eine Breite (Außenwandung werkzeugseitiges Halterteil zu Innenwandung Hülse) von üblicherweise 0,1 - 2 mm, d.h. von der Zentralachse des Werkzeughalters kann das werkzeugseitige Halterteil 2 entsprechend weit hin zur Hülse verschoben werden. Der Ringraum ist aber nicht auf diese üblichen Maße festgelegt, bei Spezialanwendungen kann dieser auch eine geringere oder größere Breite aufweisen.

Bei der in Figur 1 gezeigten ersten Ausführungsform umfasst die Kupplungseinrichtung 40 zwei Wälzscheiben 60, die jeweils eine Mehrzahl von Öffnungen zur Aufnahme von (in Figur 1 nicht dargestellten) Wälzkörpern aufweisen. Maschinenseitig schließt sich an die Kupplungseinrichtung eine Stützscheibe 16 an, an diese wiederrum eine elastische Kunststoffscheibe 17, welche üblicherweise eine Shore-A-Härte von zwischen 70 und 120 aufweist. Die Shore-A-Härte der Kunststoffscheibe, und damit die Elastizität der Kunststoffscheibe, wird an die Werkzeughaltergröße, das Gewicht des Werkzeugs und die Bearbeitungsparameter angepasst, und zwar derart, dass ein Verkippen des werkzeugseitigen Halterteils möglich ist, sofern dies erforderlich ist (Ausrichtung Werkzeughalter oder Werkstück nicht genau; Vorbohrung nicht genau etc.).

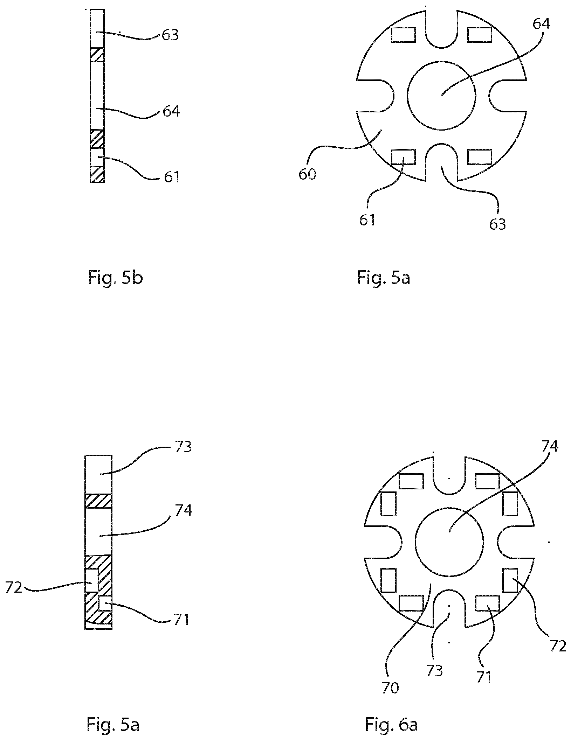

Zur drehfesten Verbindung der beiden Halterteile umfasst der Werkzeughalter bei der gezeigten Ausführungsform jeweils zwei den beiden Halterteilen zugeordnete Mitnehmer 8a, 8b, die in Öffnungen in den Halterteilen angeordnet sind. Die Mitnehmer erstrecken sich bei dieser Ausführungsform durch u.a. beide Wälzscheiben 60, und zwar durch entsprechende Öffnungen in diesen Wälzscheiben, welche unter Bezugnahme auf die Figuren 5a, 5b näher beschrieben sind.

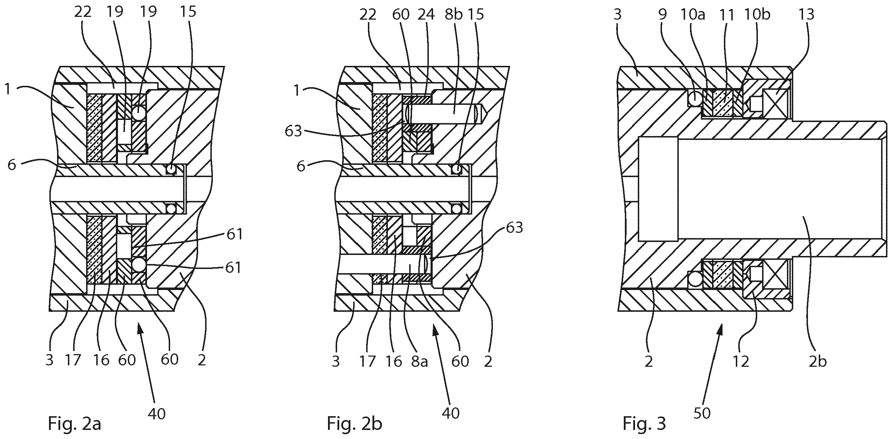

Üblicherweise sind pro Halterteil zwei um 180° versetzte Mitnehmer vorgesehen, und die Halterteile sind bezogen auf die Mitnehmer um 90° verdreht, so dass die Mitnehmer bzw. die Öffnungen für die Mitnehmer gleichmäßig über die Wälzscheiben verteilt sind. Bei Figur 1 (und der nachfolgend beschriebenen Figur 2b) sind zur besseren Veranschaulichung der Verbindung der Halterteile die den beiden Halterteilen zugeordnete Mitnehmer 8a, 8b dargestellt, d.h. die Darstellung entspricht nicht der oben gennannten üblichen Anordnung der Mitnehmer.

Figuren 2a und 2b zeigen Detailansichten der Kupplungseinrichtung 40, wobei auch diese Ansichten zur besseren Veranschaulichung keine "echten" Schnittansichten darstellen, sondern schematisch die Lage der einzelnen Bauteile darstellen.

Wie Figur 2a zu entnehmen ist, umfassen beide Wälzscheiben 60 Durchgangsöffnungen 61, in denen Wälzkörper 19 angeordnet sind. Bei der gezeigten Ausführungsform sind die Wälzkörper 19 als Rollen ausgeführt, die Durchgangsöffnungen 61 sind entsprechend ausgebildet. Wie dies insbesondere bei den Figuren 2a und 2b zu erkennen ist, sind die Kupplungseinrichtung 40, die Stützscheibe 16 und die elastische Kunststoffscheibe 17 nicht direkt in der Hülse 3, sondern in einem Hohlzylinder 22 angeordnet, der wiederrum in der Hülse 3 angeordnet ist.

Bei Figur 2b ist insbesondere die Führung der den Halterteilen zugeordneten Mitnehmer 8a, 8b zu erkennen. Bei der gezeigten Ausführungsform sind die Mitnehmer nicht direkt von Öffnungen 63 in den Wälzscheiben 60 aufgenommen, sondern sind von Käfigen 24 umgeben. Unabhängig davon, ob die gezeigten Käfige 24 verwendet werden oder nicht, sind die Öffnungen 63 der Wälzscheiben so zu gestalten, dass das Radialspiel gewährleistet ist.

Wie dies wiederum Figur 1 zu entnehmen ist, ist das werkzeugseitige Halterteil über eine Vorspanneinrichtung 50 in der Hülse 3 bzw. gegenüber dem maschinenseitigen Halterteil 1 verspannt bzw. axial verstellbar gelagert. Dazu umfasst die Vorspanneinrichtung einen Vorspannring 12, mit welchem das werkzeugseitige Halterteil gegen das maschinenseitige Halterteil gedrückt wird.

Um das Radialspiel des werkzeugseitigen Halterteils auch im Bereich der Vorspanneinrichtung 50 zu gewährleisten, umfasst diese eine Mehrzahl von Wälzkörpern 9, die in einem Ringraum des werkzeugseitigen Halterteils angeordnet sind. Diese Wälzkörper sind bei der gezeigten Ausführungsform als Kugeln ausgebildet.

Wie bereits dargestellt, kann das werkzeugseitige Halterteil 2 aufgrund der elastischen Kunststoffscheibe, die auch für die Unterbrechung der Schwingungsübertragung verantwortlich ist, gegenüber dem maschinenseitigen Halterteil (und in der Hülse und der Vorspanneinrichtung) verkippen. In der Praxis bedeutet dies in der Regel einen Winkel von bis zu 0,5° bezüglich der Längsachse des Werkzeughalters. Bei dem Verkippen bewegt sich auch der Teil des werkzeugseitigen Halterteils, der von der Vorspanneinrichtung 50 umschlossen ist. Kippt das werkzeugseitige Halterteil beispielsweise "nach unten", wird die Vorspannrichtung in diesem Bereich bei dem bzw. an dem Kunststoffring 11 komprimiert. Ohne Verwendung des Kunststoffrings würde eine starke Kraft auf die Wälzkörper 9 ausgeübt, welche zu Schäden an diesen oder dem Ringraum, in welchem sie gelagert sind, führen würde, was wiederrum den Radialausgleich beeinträchtigen würde. Wie dies insbesondere Figur 3 zu entnehmen ist, ist der Kunststoffring 11 bei der gezeigten Ausführungsform zum Schutz gegenüber den Wälzkörpern 9 und dem Vorspannring 12 stirnflächig von zwei Stützringen 10a, 10b umgeben.

Zur Kühlung des Werkzeuges umfasst die in Figur 1 gezeigte Ausführungsform eine Kühlmittelleiteinrichtung 6, 15. Diese umfasst ein Kühlmittelleitrohr 6, welches sich durch Öffnungen in der Kunststoffscheibe 17 und der Kupplungseinrichtung 40 erstreckt. Ein Ende des Kühlmittelleitrohrs 6 ist in einer Ausnehmung 1c des maschinenseitigen Halterteils 1 angeordnet, wobei ein elastischer O-Ring 15 zur Abdichtung vorgesehen ist. Entsprechend ist das andere Ende des Kühlmittelleitrohrs 6 in einer Ausnehmung 2c des werkzeugseitigen Halterteils 2 angeordnet und mit einem O-Ring gesichert. Um sicherzustellen, dass das Radialspiel von der Kühlmittelleiteinrichtung nicht gestört wird, ist der Außendurchmesser des Kühlmittelleitrohrs 6 geringer als der Innendurchmesser der Ausnehmungen in den Halterteilen, und zwar in Abstimmung an die Breite des Ringraums zwischen werkzeugseitigem Halterteil und Hülse.

Das maschinenseitige Ende der Kühlmittelleiteinrichtung ist mit einer Kühlmittelleitung 20 in dem maschinenseitigen Halterteil verbunden, das werkzeugseitige Ende mit einer weiteren Kühlmittelleitung 21 in dem werkzeugseitigem Halterteil 2, über welche das Kühlmittel dem Werkzeug zugeführt wird. Innerhalb des Werkzeugs wird das Kühlmittel üblicherweise über eine weitere Leitung dem Schneidbereich des Werkzeuges zugeleitet.

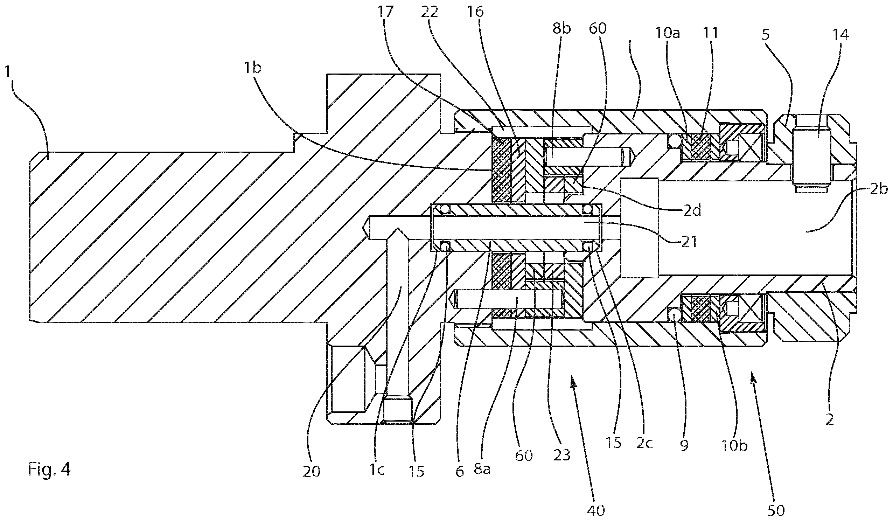

Figur 4 zeigt eine zweite Ausführungsform des erfindungsgemäßen Werkzeughalters. Diese unterscheidet sich von der ersten Ausführungsform lediglich in der Ausführung der Kupplungseinrichtung 40, so dass auf eine Beschreibung der restlichen Bauteile verzichtet wird.

Bei dieser Ausführungsform umfasst das Kupplungsmittel der Kupplungseinrichtung 40 drei Scheiben, nämlich zwei Wälzscheiben 60 mit einer Mehrzahl von (nicht dargestellten) Wälzkörpern. Zwischen den Wälzscheiben 60 ist eine wälzkörper-freie Kupplungsscheibe 23 angeordnet. Die Wälzkörper in den Wälzscheiben ragen über beide Stirnflächen der Wälzscheibe hinaus, d.h. die Wälzköper der werkzeugseitigen Wälzscheibe laufen auf der Stirnseite 2d des werkzeugseitigen Halterteils und der Kupplungsscheibe 23, die Wälzkörper der maschinenseitigen Wälzscheibe auf der Stützscheibe 16 und der Kupplungsscheibe 23. Aufgrund der Zwischenschaltung der Kupplungsscheibe sind die den Halterteilen zugeordneten Mitnehmer 8a, 8b nicht mehr durch beide Wälzscheiben geführt, sondern lediglich bis zur zentralen Kupplungsscheibe. Bei Verwendung von zwei Mitnehmern pro Halterteil müssen die Wälzscheiben bei dieser Ausführungsform also lediglich zwei Öffnungen für Mitnehmer aufweisen, die Kupplungsscheibe allerdings vier.

Figuren 5a, 5b zeigen zwei Ansichten einer ersten Ausführungsform einer Wälzscheibe, wobei Figur 5a eine Draufsicht und Figur 5b eine Schnittansicht zeigt. Wie den Figuren zu entnehmen ist, umfasst die Wälzscheibe 60 eine zentrale Öffnung 64 für eine Kühlmittelleiteinrichtung. Wird eine Kühlmittelleiteinrichtung nicht verwendet, kann auch diese Öffnung fortgelassen werden. Die Wälzscheibe 60 umfasst am Umfang ferner vier Öffnungen 63 zur Durchführung bzw. Aufnahme der Mitnehmer bzw. der Käfige der Mitnehmer. Die Anzahl der Öffnungen für die Mitnehmer ist abhängig von der genauen Ausgestaltung der Kupplungseinrichtung. Bei Annahme von zwei Mitnehmern pro Halterteil sind bei der ersten Ausführungsform (Figuren 1 - 3) des Werkzeughalters vier, bei der zweiten Ausführungsform (Figur 4) zwei Öffnungen erforderlich. Die Wälzscheibe umfasst schließlich vier Durchgangsöffnungen 61 für Wälzkörper. Diese sind bei der gezeigten Ausführungsform derart über die Fläche der Wälzscheibe verteilt, dass bei Übereinanderlegen von zwei Wälzscheiben und Verdrehung um 90° die Wälzkörper der einen bei einem wälzkörper-freien Bereich der anderen Wälzscheibe angeordnet sind. Wälzscheiben mit einer derartigen Anordnung der Öffnungen für Wälzkörper können bei der ersten Ausführungsform des Werkzeughalters verwendet werden.

Figuren 6a, 6b zeigen eine zweite Ausführungsform einer Wälzscheibe, die bei keiner der gezeigten Ausführungsformen des Werkzeughalters gezeigt ist, erfindungsgemäß aber verwendet werden kann. Die Wälzscheibe umfasst auf beiden Stirnflächen eine Mehrzahl von Ausnehmungen 71, 72, die jedoch nicht vollständig durch die Wälzscheibe geführt sind, d.h. es handelt sich nicht um Durchgangsöffnungen. In den Ausnehmungen auf beiden Stirnflächen werden Wälzkörper angeordnet, die dann über beide Stirnflächen der Wälzscheibe hinausragen, die Wälzscheibe aber nicht durchdringen. Bei dieser Ausführungsform gewährleistet eine Wälzscheibe also eine radiale Verschiebung zu beiden Stirnflächen hin. Auch diese Wälzscheibe umfasst eine zentrale Öffnung 74 für eine mögliche Kühlmittelleiteinrichtung sowie vier Öffnungen 73 für den Halterteilen zugeordnete Mitnehmer, wobei bei Annahme von zwei Mitnehmern pro Halterteil vier Öffnungen erforderlich sind.

Bei beiden Wälzscheiben sind die Ausnehmungen / Durchgangsöffnungen für die Wälzkörper rechteckig ausgebildet, so dass vorzugsweise Wälzrollen verwendet werden können, wobei diese bei der zweiten Ausführungsform bei beiden Stirnflächen um 90° versetzt sind. Alternativ können die Ausnehmungen / Durchgangsöffnungen beispielsweise auch quadratisch zur Aufnahme von Kugeln sein.

## Patentansprüche

1. Werkzeughalter für Werkzeugmaschinen mit einem maschinenseitigen Halterteil (1) und einem werkzeugseitigen Halterteil (2),
einer zwischen den Halterteilen angeordneten (1, 2) Kupplungseinrichtung (40), welche die beiden Halterteile (1, 2) mit radialem Spiel drehfest miteinander verbindet,
einer das werkzeugseitige Halterteil (2) gegen das maschinenseitige Halterteil (1) verspannenden, das werkseitige Halterteil (2) zumindest teilweise umgebenden Vorspanneinrichtung (50), wobei die Vorspanneinrichtung (50) eine Mehrzahl von Wälzkörpern (9) und einen elastischen Kunststoffring (11) umfasst, wobei zwischen der Kupplungseinrichtung (40) und dem maschinenseitigen Halterteil (1) eine elastische Kunststoffscheibe (17) angeordnet ist, welche eine Schwingungsübertragung zwischen den Halterteilen (1, 2) verhindert und gleichzeitig einen Winkelausgleich des werkzeugseitigen Halterteils (2) ermöglicht,
**dadurch gekennzeichnet,**
**dass** die Kupplungseinrichtung (40) ein zylinderförmiges Kupplungsmittel (60, 70, 19) aufweist, welches eine Mehrzahl von Wälzkörpern (19) aufweist, wobei die Wälzkörper (19) derart in dem Kupplungsmittel angeordnet sind, dass die Wälzkörper (19) aus zwei Stirnflächen des Kupplungsmittels hervorragen.

2. Werkzeughalter für Werkzeugmaschinen nach Anspruch 1, **dadurch gekennzeichnet, dass** das Kupplungsmittel von einer Wälzscheibe (70) gebildet ist, welche in den den Halterteilen (1, 2) zugewandten Stirnflächen Ausnehmungen (71, 72) aufweist, in welchen Wälzkörper (19) angeordnet sind.

3. Werkzeughalter für Werkzeugmaschinen nach Anspruch 1, **dadurch gekennzeichnet, dass** das Kupplungsmittel zwei hintereinander angeordnete Wälzscheiben (60) mit einer Mehrzahl von Öffnungen (61) aufweist, in welchen Wälzkörper (19) angeordnet sind.

4. Werkzeughalter für Werkzeugmaschinen nach Anspruch 3, **dadurch gekennzeichnet, dass** die Öffnungen (61) als Durchgangsöffnungen ausgebildet sind, wobei die Durchgangsöffnungen und die Wälzscheiben derart angeordnet sind, dass die Wälzköper der einen Wälzscheibe bei einem wälzkörper-freien Bereich der anderen Wälzscheibe anliegen.

5. Werkzeughalter für Werkzeugmaschinen nach Anspruch 1, **dadurch gekennzeichnet, dass** das Kupplungsmittel zwei Wälzscheiben (60) mit einer Mehrzahl von Öffnungen (61) aufweist, in welchen Wälzkörper (19) angeordnet sind, wobei zwischen den Wälzscheiben (60) eine wälzkörper-freie Kupplungsscheibe (23) angeordnet ist.

6. Werkzeughalter für Werkzeugmaschinen nach einem der Ansprüche 1 - 5, **dadurch gekennzeichnet**, das zwischen der Kunststoffscheibe (17) und der Kupplungseinrichtung (40) eine Stützscheibe (16) angeordnet ist.

7. Werkzeughalter für Werkzeugmaschinen nach einem der Ansprüche 1 - 6, **dadurch gekennzeichnet, dass** sich durch die Kupplungseinrichtung (40) und die elastische Kunststoffscheibe (17) eine Kühlmittelleiteinrichtung (6, 15) erstreckt, wobei die Kühlmittelleiteinrichtung derart ausgebildet ist, dass das Radialspiel zwischen den Halterteilen (1, 2) nicht beeinträchtigt ist.

8. Werkzeughalter für Werkzeugmaschinen nach Anspruch 7, **dadurch gekennzeichnet, dass** die Enden der Kühlmittelleiteinrichtung in Ausnehmungen (1c, 2c) der Halterteile aufgenommen sind, wobei der Außenumfang der Enden der Kühlmittelleiteinrichtung kleiner als der Innenumfang der Ausnehmungen ist und wobei die beiden Enden mit elastischen O-Ringen (15) in den Ausnehmungen (1c, 2c) gesichert sind.

## Claims

1. A tool holder for machine tools comprising a machine-side holder part (1) and a tool-side holder part (2),
a coupling device (40), which is arranged between the holder parts (1, 2) and which connects the two holder parts (1, 2) to one another with radial play in a rotationally fixed manner,
a pretensioning device (50), which tensions the tool-side holder part (2) against the machine-side holder part (1) and which at least partially surrounds the tool-side holder part (2), wherein the pretensioning device (50) comprises a plurality of rolling bodies (9) and an elastic plastic ring (11), wherein an elastic plastic disk (17), which prevents a vibration transfer between the holder parts (1, 2) and which simultaneously provides for an angle compensation of the tool-side holder part (2), is arranged between the coupling device (40) and the machine-side holder part (1),
**characterized in**
**that** the coupling device (40) has a cylindrical coupling means (60, 70, 19), which has a plurality of rolling bodies (19), wherein the rolling bodies (19) are arranged in the coupling means in such a way that the rolling bodies (19) protrude from two front surfaces of the coupling means.

2. The tool holder for machine tools according to claim 1, **characterized in that** the coupling means is formed by a rolling disk (70), which, in the front surfaces facing the holder parts (1, 2), has recesses (71, 82), in which rolling bodies (19) are arranged.

3. The tool holder for machine tools according to claim 1, **characterized in that** the coupling means has two rolling disks (60) arranged downstream from one another comprising a plurality of openings (61), in which rolling bodies (19) are arranged.

4. The tool holder for machine tools according to claim 3, **characterized in that** the openings (61) are embodied as through-holes, wherein the through-holes and the rolling disks are arranged in such a way that the rolling bodies of the one rolling disk abut against a rolling body-free area of the other rolling disk.

5. The tool holder for machine tools according to claim 1, **characterized in that** the coupling means has two rolling disks (60) comprising a plurality of openings (61), in which rolling bodies (19) are arranged, wherein a rolling body-free coupling disk (23) is arranged between the rolling disks (60).

6. The tool holder for machine tools according to one of claims 1-5, **characterized in that** a support disk (16) is arranged between the plastic disk (17) and the coupling device (40).

7. The tool holder for machine tools according to one of claims 1-6, **characterized in that** a coolant guide device (6, 15) extends through the coupling device (40) and the elastic plastic disk (17), wherein the coolant guide device is embodied in such a way that the radial play between the holder parts (1, 2) is not impacted.

8. The tool holder for machine tools according to claim 7, **characterized in that** the ends of the coolant guide device are accommodated in recesses (1c, 2c) of the holder parts, wherein the outer circumference of the ends of the coolant guide device is smaller than the inner circumference of the recesses and wherein the two ends are secured in the recesses (1c, 2c) by means of elastic O-rings (15).

## Revendications

1. Porte-outils pour machines-outils, comportant une pièce support au niveau de la machine (1) et une pièce support au niveau de l'outil (2),
un dispositif de couplage (40) disposé entre les pièces supports (1, 2) et qui relie les deux pièces supports (1, 2) entre elles de manière fixe en rotation avec un jeu radial,
un dispositif de précontrainte (50) serrant la pièce support située au niveau de l'outil (2) contre la pièce support située au niveau de la machine (1) et entourant du moins partiellement la pièce support située au niveau de l'outil (2), le dispositif de précontrainte (50) comprenant une pluralité de corps de roulement (9) et une bague en matière plastique élastique (11), sachant que, entre le dispositif de couplage (40) et la pièce support située au niveau de la machine (1), est disposé un disque en matière plastique élastique (17) qui empêche un transfert de vibrations entre les pièces supports (1, 2) et permet en même temps une correction d'angle de la pièce support située au niveau de l'outil (2)
**caractérisé en ce que**
le dispositif de couplage (40) présente un moyen de couplage de forme cylindrique (60, 70, 19) qui présente une pluralité de corps de roulement (19), les corps de roulement (19) étant disposés dans le moyen de couplage de manière à ce que les corps de roulement (19) dépassent de deux surfaces avant du moyen de couplage.

2. Porte-outils pour machines-outils selon la revendication 1, **caractérisé en ce que** le moyen de couplage est constitué d'un disque de roulement (70) qui présente, dans ses faces avant tournées vers les pièces supports (1, 2), des échancrures (71, 72) dans lesquelles sont disposés des corps de roulement (19).

3. Porte-outils pour machines-outils selon la revendication 1, **caractérisé en ce que** le moyen de couplage présente deux disques de roulement disposés l'un derrière l'autre (60) dotés d'une pluralité d'orifices (61) dans lesquels sont disposés des corps de roulement (19) .

4. Porte-outils pour machines-outils selon la revendication 3, **caractérisé en ce que** les orifices (61) sont réalisés sous forme d'orifices traversants, les orifices traversants et les disques de roulement étant disposés de manière à ce que les corps de roulement d'un des disques de roulement reposent dans une zone exempte de corps de roulement de l'autre disque de roulement.

5. Porte-outils pour machines-outils selon la revendication 1, **caractérisé en ce que** le moyen de couplage présente deux disques de roulement (60) dotés d'une pluralité d'orifices (61) dans lesquels sont disposés des corps de roulement (19), un disque de couplage (23) exempt de corps de roulement étant disposé entre les disques de roulement (60).

6. Porte-outils pour machines-outils selon une des revendications 1 à 5, **caractérisé en ce que**, entre le disque en matière plastique (17) et le dispositif de couplage (40), un disque support (16) est disposé.

7. Porte-outils pour machines-outils selon une des revendications 1 à 6, **caractérisé en ce qu'**un dispositif de fluide de refroidissement (6, 15) s'étend à travers le dispositif de couplage (40) et le disque en matière plastique (17), le dispositif de fluides de refroidissement (1, 2) étant réalisé de manière à ne pas affecter le jeu radial entre les pièces supports (1, 2).

8. Porte-outils pour machines-outils selon la revendication 7, **caractérisé en ce que** les extrémités du dispositif de fluide de refroidissement sont reçues dans des échancrures (1c, 2c) des supports, la circonférence extérieure des extrémités du dispositif de fluide de refroidissement étant inférieure à la circonférence intérieure des échancrures et les deux extrémités étant bloquées par des joints toriques élastique (15) dans les échancrures (1c, 2c).
